# EUROPEAN PATENT SPECIFICATION

(11) **EP 0 436 023 B1**
(45) Date of publication and mention of the grant of the patent: **11.05.1994**
(21) Application number: 89910182.8
(22) Date of filing: 19.09.1989
(51) Int. Cl.: F03B 13/26

(54) **MULTIPLE GASEOUS PHASE SYSTEM TIDE RANGE POWER GENERATION METHOD**
GEZEITENENERGIE-GEWINNUNGSVERFAHREN MITTELS EINER MEHRERE GASPHASEN ENTHALTENDEN EINRICHTUNG
PROCEDE DE PRODUCTION D'ENERGIE EXPLOITANT LES MAREES GRACE A UN SYSTEME A PHASES GAZEUSES MULTIPLES

(30) Priority: 21.09.1988 JP 236962/88
(43) Date of publication of application: 10.07.1991
(73) Proprietor: YUUGEN KAISYA PARASIGHT, Chiba 280 (JP)
(72) Inventor: NOJIMA, Hisatake, Chiba-shi Chiba 280 (JP)
(74) Representative: Goddar, Heinz J., Dr.
(86) International application number: PCT/JP89/00946
(87) International publication number: WO 90/03516

(56) References cited:
- FR-A- 615 672
- GB-A- 2 161 544
- JP-A- 6 123 877
- JP-B- 253 654
- JP-B- 5 644 265
- JP-Y- 215 126
- US-A- 4 098 081

## Description

The invention relates to a tidal power converting apparatus with the features of the preamble of claim 1 as known from document GB-A-2 161 544.

Further, reference is made to JP-A-5 644 265 which shows two groups of containers being in communication by air pipes.

It is the object of the invention to provide a tidal power converting apparatus which produces air under high pressure using only a small area.

According to the invention, this object is solved by the features of the only claim.

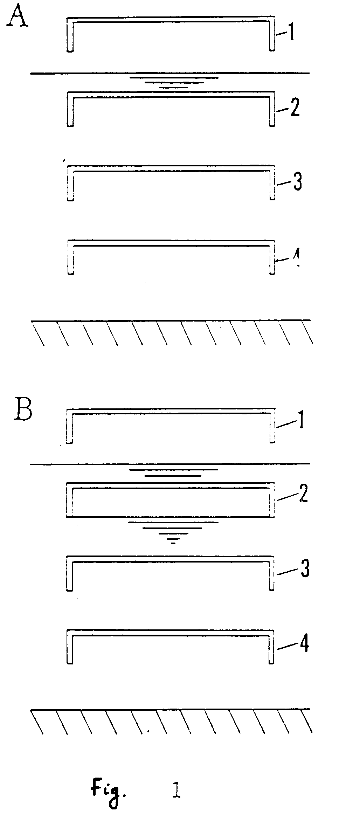

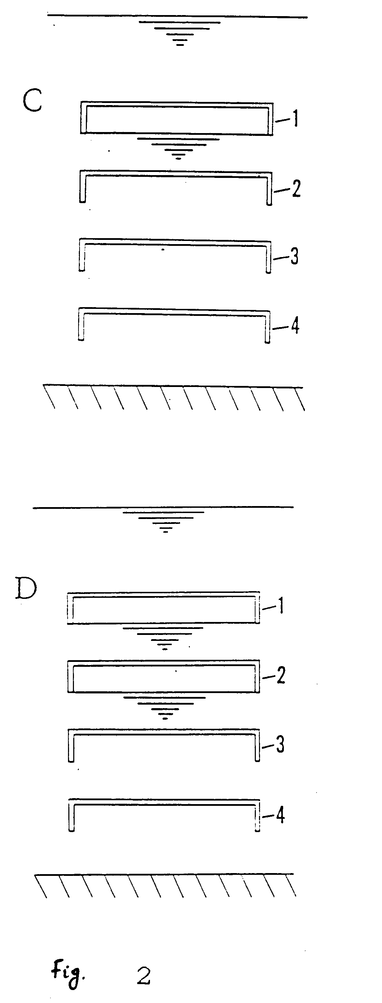

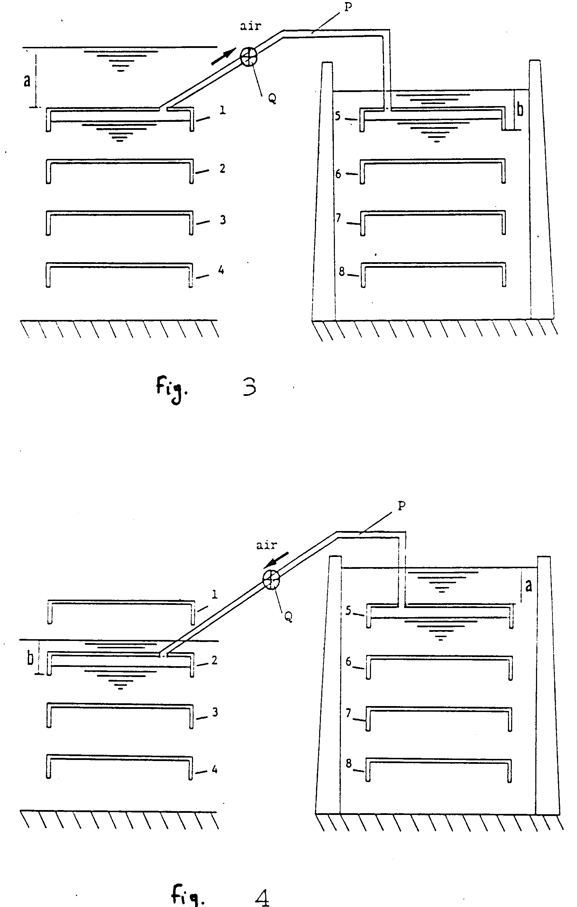

Fig. 1 includes views of the embodiment at low tides, in the view A of which a container 1 above the surface of the sea is in a state of letting air naturally come therein, in view B of which a container 2 is in a state that the air is artificially transferred thereinto to stay as compressed air. Both the views are shown in cross sections. Fig. 2 includes views of the embodiment at high tides, the view C of which shows a state that the compressed air having first tidal energy is made in the container 1, the view D of which shows a state that second tidal energy is added to the compressed air in the container 2. Both the views are shown in cross sections. Fig. 3 is a cross sectional view at the time when the compressed air in the container 1 (the left in Fig. 3), which has been made in the state shown in the view C of Fig. 2 at the high tide, is transferred into a container 5 within an artificial dam (the right in Fig. 3). The transfer is conducted through an air pipe P by opening or closing a valve Q. Fig. 4 is a cross sectional view at the time when the compressed air (the right in the figure), which has been stored in the container 5 of the artificial dam shown in Fig. 3 at the high tide, is transferred into the container 2 (the left in the figure) in the natural sea at the low tide. The transfer is conducted through another air pipe P by opening or closing another valve Q.

Referring first to the view A of Fig. 1, the container 1 lies above the surface of the sea at a low tide, and contains air. At this time, the containers 2, 3 and 4 are under water and has no air therein. When the tide has risen to result in the state shown in the view C of Fig. 2, as shown in Fig. 3, the compressed air in the container 1 is transferred into the container 5 within the dam through the air pipe to be stored therein. Then, after the tide has ebbed or lowered again, as shown in Fig. 4, the compressed air stored in the container 5 is transferred through the other air pipe P into the container 2 which is under the surface of the sea. The container 2 after the transfer comes into the state shown in the view B of Fig. 1. When the tide has risen again, the container 2 is in the state shown in the view D of Fig. 2, and the air more highly compressed is obtained. By repeating these steps in order, the compressed air is made in succession, so that the more highly compressed, energetic air for power generation can be obtained from the lowermost container 4 at the two high tides every day. Although not shown in the figures, the compressed air of a high pressure is transported to a gas turbine through air pipes to be used for power generation.

At the high tide, the compressed air may surely be stored within the artificial dam when the storage in the containers within the artificial dam is conducted in the order that, at the beginning, the compressed air of the highest pressure is transferred in the lowermost container and, then, those of lower pressures are stored in the corresponding containers over the lowermost container. In contrast with this, at the low tide, when each compressed air within the artificial dam is transferred to the corresponding container in the natural sea, the transfer is started with the compressed air in the uppermost container and, then, those in the subsequent containers under the uppermost container are transferred. Thus, the invention is theoretically based on the realization of storage of the compressed air within the single dam in a three-dimensional manner.

The above implies that sufficient tidal energy can be obtained even in a sea having a little tidal difference in height of the sea level if there is a certain three-dimensional room under the water. The Ariake Sea in Japan has only the maximum tidal difference of 4 meters in height of the sea level, but has a sufficient area. In such a sea, when using the apparatus of the invention, there is no need of providing the apparatuses all over the region of the sea. By digging down parts of the bottom of the sea, even when each apparatus provided is small in size, the sea water above the other parts of the bottom of the sea sufficiently flows into the dug part. This means that the tidal energy inherent in the region of the sea can be gathered to be converted into the form of the compressed air.

Although the tidal energy thus obtained decreases considerably every time the compressed air is transferred between the containers, additional tidal energy is gained at every high tide to make up for the decrease. The reasons for the decrease are that part of the tidal energy is spent in transferring the compressed air, that part of the compressed air has to stay in the air pipes for transfer which make dead spaces between the containers, and that the air dissolves in the water little by little. With respect to the latter two reasons, the dead spaces can completely disregarded when the apparatus is continuously operated. The dissolve of the air may be dealt with by taking such measures of making small the area of the sea water to be in contact with the air or minimizing the movement of the sea water to minimize the dissolve of components of the air, such as nitrogen and oxygen. The transfer of the air between the containers is done, as shown in Figs. 3 and 4, through the air pipes which are provided on the respective bottoms of the inverted containers, or on the upper part partitions thereof, by opening or closing the valves. In theory, it is possible to transfer the air through the air pipes as far as a water depth a is larger than a water depth b in Fig. 3 or 4.

With regard to the fixation of the containers for holding the air in the sea, although the fixation may be made in various ways, the way of providing supporting posts at the bottom of the sea and fixing the containers to the posts is easy to be taken. Each container having the air therein is largely buoyant, and gives rise to problems as to what material to be used for the container and how to fix the same. However, the problems would cause no technical difficulty if appropriate measures are taken against the buoyant force in addition to the utilization of the technology for constructing a gathering-place for fish.

## Claims

1. A tidal power converting apparatus comprising a group of containers (1, 2, 3, 4) fixed in plural piles in a natural sea having a tidal difference in height of sea level, whereby said containers (1, 2, 3, 4) are spaced in parallel to one another at fixed intervals and each of said containers (1, 2, 3, 4) is opened at a lower side thereof and is capable of holding air therein, characterised in that another group of containers (5, 6, 7, 8) with the same configuration as the first group is fixed in tideless water within an artificial dam and that air pipes (P) provide communication between said respective containers (1, 2, 3, 4) of the group in the natural sea and said respective containers (5, 6, 7, 8) of the other group within the artificial dam, wherein at high tide first pipes (P) each provided with a first valve (Q) connect each of the containers (1, 2, 3, 4) of the first group with the respective container (5, 6, 7, 8) of the second group fixed on the same level and at low tide second pipes (P) each provided with a valve (Q) connect each except the upper most container (2, 3, 4) of the first group with the container (5, 6, 7) of the second group, which is fixed on one level higher.

## Patentansprüche

1. Gezeitenkraftwerk mit einer Gruppe von Behältern (1, 2, 3, 4), die in mehreren Säulen in der natürlichen See mit einem Tidenhub des Wasserspiegels angeordnet sind, wobei die Behälter (1, 2, 3, 4) parallel zueinander bei festen Intervallen beabstandet sind und jeder der Behälter (1, 2, 3, 4) an einer unteren Seite geöffnet ist und dazu in der Lage ist, Luft in diesem zu halten, dadurch gekennzeichnet, daß eine weitere Gruppe von Behältern (5, 6, 7, 8) mit derselben Ausbildung wie die erste Gruppe in tidefreiem Wasser in einem künstlichen Damm fest angeordnet ist und daß Luftrohre (P) eine Kommunikation zwischen den jeweiligen Behältern (1, 2, 3, 4) der Gruppe in der natürlichen See und den jeweiligen Behältern (5, 6, 7, 8) der anderen Gruppe innerhalb des künstlichen Damms schaffen, wobei bei hoher Tide erste Röhren (P), die jeweils mit einem ersten Ventil (Q) verbunden sind, jeden der Behälter (1, 2, 3, 4) der ersten Gruppe mit dem jeweiligen Behälter (5, 6, 7, 8) der zweiten Gruppe, der auf derselben Ebene angeordnet ist, und bei tiefer Tide zweite Röhren (P), die jeweils mit einem Ventil (Q) versehen sind, jeden mit Ausnahme des obersten Behälters (2, 3, 4) der ersten Gruppe mit dem Behälter (5, 6, 7) der zweiten Gruppe, der auf einer Stufe höher angeordnet ist, verbindet.

## Revendications

1. Appareil de conversion de puissance marémotrice, comprenant un groupe de récipients (1, 2, 3, 4) fixés en plusieurs piles dans une mer naturelle présentant, sous l'effet de la marée, une différence de hauteur du niveau, de manière que lesdits récipients (1, 2, 3, 4) soient espacés parallèlement entre eux, à des intervalles déterminés et que chacun desdits récipients (1, 2, 3, 4) soit ouvert sur son côté inférieur et soit capable de contenir de l'air en son sein, caractérisé en ce qu'un autre groupe de récipients (5, 6, 7, 8) présentant la même configuration que le premier groupe est fixé dans de l'eau sans effet de marée, à l'intérieur d'un barrage artificiel et en ce que des tuyaux d'air P établissent une communication entre les récipients (1, 2, 3, 4) respectifs du groupe dans la mer naturelle et lesdits récipients (5, 6, 7, 8) respectifs de l'autre groupe situé dans le barrage artificiel, dans lequel à marée haute, des premiers tuyaux (P), pourvus chacun d'une première soupape (Q), relient chacun des récipients (1, 2, 3, 4) du premier groupe au récipient (5, 6, 7, 8) respectif du second groupe, fixé au même niveau et, à marée basse, des second tuyaux (P), pourvus chacun d'une soupape (Q), relient chaque récipient (2, 3, 4) du premier groupe, excepté celui situé le plus haut, au récipient (5, 6, 7) du second groupe qui est fixé à un niveau plus haut.
